# EUROPÄISCHE PATENTANMELDUNG

(11) **EP 1 852 720 A2**
(43) Veröffentlichungstag der Anmeldung: **07.11.2007**
(21) Anmeldenummer: 07008120.3
(22) Anmeldetag: 20.04.2007
(51) Int. Cl.: G02B 6/00

(54) **Flächiges Leuchtelement**

(30) Priorität: 20.04.2006 DE 202006006387 U
(71) Anmelder: Pyratec Produktion GmbH & Co. KG, 22397 Volksdorf (DE)
(72) Erfinder: Leutermann, Hubert, 48341 Altenberge (DE); Ramminger, Jörg, 81929 München (DE)
(74) Vertreter: Schupfner, Georg

(57) **Zusammenfassung**

Gegenstand der Erfindung ist ein flächiges Leuchtelement in Form eines Verbundsystems aus mindestens zwei Deckschichten (3,31) zwischen denen ein Gewebe (1) aus lichtleitenden Fasern (2) angeordnet ist. Die Deckschichten bestehen dabei aus einem lichtdurchlässigen oder transluzenten Polymer, insbesondere einem Fluorpolymer.

## Beschreibung

Die Erfindung betrifft ein flächiges Leuchtelement in Form eines Verbundsystems, das aus zwei Deckschichten besteht, zwischen denen ein Gewebe aus lichtleitenden Fasern angeordnet ist. Die Deckschichten bestehen dabei aus einem lichtdurchlässigen oder transluzenten Polymer. Durch Einkopplung von Licht an den Faserenden mittels einer Lichtquelle wird ein illuminierender Effekt des Leuchtelementes und damit verbunden eine Beleuchtung der Umgebung ermöglicht. Der Einsatz von Lichtleitfasern findet im Bereich der Lichtinstallation eine immer breitere Verwendung. Das Prinzip beruht darauf, dass mittels eines Projektors oder LEDs mit einer geeigneten Optik Licht in entsprechende Glas- oder Kunststofffasern über deren Kopfende eingekoppelt wird, wobei diese so beschaffen sind, dass das Licht in den umgebenden Raum abgestrahlt werden kann.

Aus der EP 1 291 160 A2 ist eine derartige Faser bekannt, wobei hier die Faser zu deren Schutz vor mechanischen Belastungen mit einer Ummantelung aus einem Kunststoff versehen ist. Nachteil dieser Technik ist allerdings, dass die Herstellung derartiger Fasern sehr aufwendig ist und eine Verarbeitung zu großflächigen Leuchtelementen aufgrund der geringen Flexibilität nur bedingt möglich ist.

Es besteht nach wie vor ein Bedarf nach flächigen Leuchtelementen, die stoffähnliche Eigenschaften aufweisen, sodass diese vielseitig verarbeitbar und einsetzbar sind.

Aufgabe der vorliegenden Erfindung war es daher, ein flächiges Leuchtelement bereitzustellen, das zum einen eine hohe Stabilität gegenüber mechanischen Belastungen aufweist, gleichzeitig aber auch stoffähnliche Eigenschaften zur besseren Verarbeitbarkeit beibehält.

Diese Aufgabe wird durch das flächige Leuchtelement mit den Merkmalen des Anspruchs 1 gelöst. Bevorzugte Ausführungsformen sind Gegenstand der Unteransprüche oder nachfolgend beschrieben.

Erfindungsgemäß wird ein flächiges Leuchtelement in Form eines Verbundsystems bereitgestellt, das aus mindestens zwei Deckschichten besteht, zwischen denen ein oder mehrere lichtleitende Fasern enthaltendes Gewebe angeordnet sind. Die Deckschichten sind dabei unabhängig voneinander aus mindestens einem lichtdurchlässigen oder transluzenten Polymer gebildet, vorzugsweise beide Deckschichten.

Der illuminierende Effekt wird durch optische Einkopplung von Licht aus einer Lichtquelle an mindestens einem Ende der lichtleitenden Fasern ermöglicht.

Um mehr Lichtstärke zu erhalten ist es häufig bevorzugt zwei und mehr Gewebe in das flächiges Leuchtelement einzubringen. Sind die Kettenfäden keine lichtleitenden Fasern können sich die lichtleitenden Fasern hierbei kreuzen oder parallel angeordnet sein, wenn mehrere Bahnen an lichtleitenden Fasern in das flächige Leuchtelement eingebracht sind. Für die leichtere Einkoppelung des Lichtes ist die parallele Anordnung bevorzugt.

Besonderer Vorteil des erfindungsgemäßen Leuchtelementes ist es, dass durch die Anordnung in Form eines Verbundsystems die lichtleitenden Fasern effizient vor mechanischen Belastungen geschützt werden, da diese in die Deckschichten eingebettet sind. Ein weiterer Vorteil beruht darauf, dass die Fasern in einem Gewebe eingewoben werden, wodurch eine sehr regelmäßige parallele Anordnung der Lichtleitfasern ermöglicht wird, eine zusätzliche Stabilisierung erreicht und eine einfache Herstellung möglich wird.

In einer bevorzugten Variante bestehen die lichtleitenden Fasern aus Glas und/oder Polymethylmethacrylat (PMMA). Es können aber auch andere Materialien eingesetzt werden, mit denen die Herstellung von lichtleitenden Fasern ermöglicht wird.

Hinsichtlich der Deckschichten ist der Einsatz beliebiger transluzenter oder lichtdurchlässiger Polymere möglich, bevorzugt sind Fluorpolymere bzw. perfluoriete Polymere. Hierzu zählen beispielsweise Tetrafluorethylen-Polymer, Ethylen-Tetrafluorethylen-Copolymer, Copolymere aus Tetrafluorethylen und perfluorierten Comonomeren, Tetrafluorethylen-Hexafluorpropylen-Copolymer, Polyvinylidenfluorid und Tetrafluorethylen-Hexafluorpropylen-Polyvinylenidenfluorid-Copolymer. Als Verkaufsprodukt seien Hostaflon® / Dyneon® genannt.

Die Deckschichten liegen dabei vorzugsweise in Form von flexiblen Folien vor, was das Einlaminieren des lichtleitenden Gewebes zwischen den Deckschichten ermöglicht, so dass die flächigen Leuchtelemente als solches flexible Folien darstellen.

In einer bevorzugten Variante ist auf der Deckschicht mindestens eine Schicht zur Oberflächenvergütung aufgebracht. Diese Schicht zur Oberflächenvergütung besteht vorzugsweise zumindest teilweise aus Polysilazan.

Eine besonders bevorzugte Variante sieht vor, dass die Deckschichten aus einem schwer entflammbaren oder selbstverlöschenden Material bestehen. Hierzu zählen beispielsweise Materialien, die die DIN 4102, die das Brandverhalten von Baustoffen und Bauteilen betrifft, erfüllen. Insbesondere sollten diese die Klassifizierung B1 oder S4 aus der genannten DIN-Norm erfüllen.

Besonderer Vorteil des Leuchtelementes ist es, dass dieses die Eigenschaften einer Folie aufweist, was vielfältige Anwendungsbereiche eröffnet. Die flächigen Leuchtelemente in Form von Folien können auf Platten, z.B durchscheinenden Platten, aufgebracht werden.

Eine weitere bevorzugte Variante des erfindungsgemäßen Leuchtelementes sieht vor, dass die erste Deckschicht Reflektoreigenschaften und die zweite Deckschicht Diffusoreigenschaften besitzt. Dies ermöglicht verbesserte optische Eigenschaften durch die Verwendung einer ersten transparenten Deckschicht und einer z.B. milchig weißen zweiten Deckschicht. Die zweite Deckschicht wirkt dabei als Reflektor, die erste Deckschicht als Diffusor. Ebenso ist in einer weiteren Variante vorgesehen, dass sowohl die erste als auch die zweite Deckschicht Diffusoreigenschaften besitzen.

In einer bevorzugten Variante werden die lichtleitenden Fasern mit Hilfe von Kettenfäden zu einem Gewebe verwoben. Das Material dieser Kettenfäden kann dabei beispielsweise aus einem Polyester bestehen. Ein derartiges Gewebe ist besonders vorteilhaft, da so die lichtleitenden Fasern, wie ein Stoff zu einem Gewebe, verarbeitet werden können.

Neben dem Laminieren des Gewebes mit den Deckschichten kann zusätzlich auch ein Adhäsionsmittel zwischen dem Gewebe und den Deckschichten zumindest bereichsweise aufgetragen sein. Dieses ist dabei vorzugsweise ausgewählt aus Klebstoffen auf Acrylbasis (umfassend (Meth)acylat-Basis) oder Zwei-Komponenten-Polyurethan-Klebstoffen. Als Adhäsionsmittel sind solche bevorzugt, die Brechungsindizes im Bereich des PMMA aufweisen.

Das Laminieren des Gewebes mit den Deckschichten kann unter Vakuum erfolgen.
Nach einer Ausgestaltung sind die Deckfolien im Randbereich (ggf. ausschließlich) verklebt oder verschweißt und das Schichtgebilde wird über Vakuum zumindest in Teilflächenbereichen zusammengehalten.

Für eine effiziente Einkopplung von Licht in die lichtleitenden Fasern werden diese vorzugsweise an mindestens einem Ende in einem optischen Verbinder zusammen geführt, der wiederum an eine beliebige Lichtquelle ankoppelbar ist. Eine derartige Ankopplung kann beispielsweise über optische Fasern, z.B. LCPOF (engl.: large-core polymer - optical fiber), einen Stab und/oder ein Faserbündel aus Polymethylmethacrylat erfolgen.

Eine weitere bevorzugte Variante sieht vor, dass die lichtleitenden Fasern an dem nicht für die Lichteinkopplung verwendeten Ende der Fasern so ausgebildet sind, dass eine Totalreflexion von Licht an diesem zweiten Ende ermöglicht wird. Dies kann beispielsweise durch eine Verspiegelung dieser Enden erfolgen.

Besonderer Vorteil des erfindungsgemäßen Leuchtelementes ist es, dass auf diese Weise großflächige Leuchtelemente herstellbar sind. Aufgrund der Tatsache, dass die lichtleitenden Fasern in Form von Endlosfasern erzeugt werden können, können Leuchtelemente beliebiger Länge hergestellt werden. Die Anpassung an die gewünschte Länge erfolgt dann einfach durch eine Trennung dieser Endlosfasern in Teilstücke. Beispielsweise können so Leuchtelemente mit einer Länge mit 20 bis 400 m hergestellt werden. Auch hinsichtlich der Breite gibt es grundsätzlich keine Limitierungen, sodass Leuchtelemente beispielsweise mit einer Breite von 1 bis 300 cm möglich sind.

Trotz dieser großflächigen Ausmaße des Leuchtelementes war es besonders überraschend, dass hier besonders geringe Dicken möglich sind, ohne die Stabilität des Leuchtelementes gegenüber mechanischen Beanspruchungen zu gefährden. So kann die Dicke in einem Bereich von 15 µm bis 2 mm, besonders bevorzugt im Bereich von 25 bis 500 µm liegen.

Das erfindungsgemäße Leuchtelement stellt einen festen Verbund dar, der aus zumindest drei Schichten besteht und im Wesentlichen die Folieneigenschaften, die durch die Deckschichten vorgegeben sind, beibehält.

Es handelt sich somit um ein Verbundsystem, das einen hervorragenden Schutz für die häufig empfindlichen, nicht witterungsbeständigen und mechanisch nicht belastbaren Lichtleitfasern darstellt. Anhand der nachfolgenden Figuren soll der erfindungsgemäße Gegenstand näher beschrieben werden.

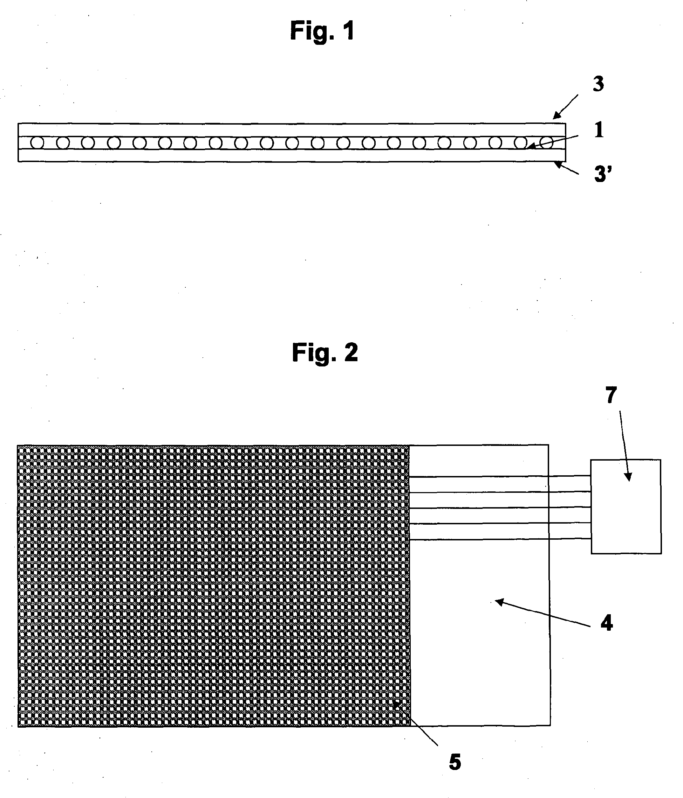

Fig. 1 zeigt ein erfindungsgemäßes Leuchtelement, das ein Gewebe 1 mit lichtleitenden Fasern 2 aufweist. Dieses Gewebe ist sandwichartig in eine erste Deckschicht 3 und eine zweite Deckschicht 3' eingebettet.

Fig. 2 zeigt einen erfindungsgemäßes Leuchtelement in Form eines großflächigen Verbundes. Für die Herstellung kann man sich hier die Vorteile der industriellen Folienproduktion zu Nutze machen, wobei das textile Gewebe wie eine Folie behandelt wird. Dies wird dadurch ermöglicht, dass die beiden Faserenden, beidseitig oder auch nur einseitig, entsprechend fixiert werden. Dies geschieht durch das Aufbringen eines Schutzklebebandes 4, hier beim Weben des Textils, sowie durch die Einbringung von gemäß dieser Figur vertikal verlaufenden Kettenfäden 5. Dies erlaubt die Verbindung der Techniken der industriellen Folien- und Textilverarbeitung. Licht wird über die Lichtquelle 7 in die Fasern eingekoppelt.

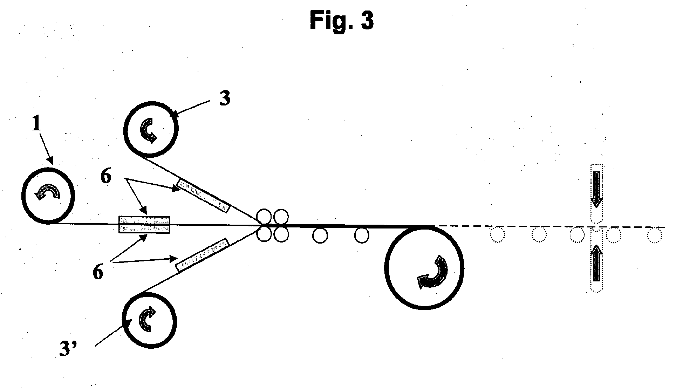

In Fig. 3 wird schematisch die Herstellung der erfindungsgemäßen Leuchtelemente dargestellt. Die Deckschichten 3 und 3' werden über Rollen von oben und unten zugeführt, wie es bei einem Laminierprozess für Folien üblich ist. An den Stationen 6 wird eine Beschichtung der Deckschichten 3 und 3' mit einem Adhäsionsmittel (Klebstoff) auf den dem Gewebe zugewandten Seiten der Deckschichten vorgenommen. Zu besseren Verbindung der beiden Deckschichten durch den Klebstoff wird auch das Gewebe von Klebstoff Durchdrungen. Zwischen den Deckschichten 3 und 3' wird dann das Gewebe 1 über eine weitere Rolle mittig zugeführt, wodurch dann das erfindungsgemäße Leuchtelement erhalten wird. Wichtig bei der Herstellung sind dabei die Kontrolle von Druck und Temperatur auf das Leuchtelement, da dieses eine begrenzte Druck- und Temperaturbeständigkeit bei der Fertigung aufweist, solange es noch nicht durch das Verbundsystem geschützt ist. Der Klebstoff 6, wie auf das Gewebe aufgebracht, sorgt für eine Durchdringung des Gewebes. Weiterhin dargestellt ist eine Rolle zum Aufwickeln der Folien oder als Alternative (gestrichelt) die Vereinzelung der Folienbahnen zu Abschnitten durch ein Schneidinstrument.

## Patentansprüche

1. Flächiges Leuchtelement in Form eines Verbundsystems aufweisend mindestens zwei Deckschichten unabhängig voneinander bestehend aus mindestens einem lichtdurchlässigen oder transluzenten Polymer, zwischen denen lichtleitende Fasern enthaltendes Gewebe angeordnet ist, wobei die lichtleitenden Fasern an mindestens einem Ende an eine Lichtquelle optisch ankoppelbar sind.

2. Leuchtelement nach Anspruch 1, **dadurch gekennzeichnet, dass** die lichtleitenden Fasern aus Glas und/oder Polymethylmethacrylat bestehen, insbesondere aus Polymethylmethacrylat.

3. Leuchtelement nach einem der vorhergehenden Ansprüche, **dadurch gekennzeichnet, dass** das transluzente oder lichtdurchlässige Polymer ein Fluorpolymer ist und insbesondere ausgewählt ist aus der Gruppe bestehend aus Tetrafluorethylen-Polymer, Ethylen-Tetrafluorethylen-Copolymer, Copolymeren aus Tetrafluorethylen und perfluorierten Comonomeren, Tetrafluorethylen-Hexafluorpropylen-Copolymer, Polyvinylidenfluorid, Tetrafluorethylen-Hexafluorpropylen-Polyvinylidenfluorid-Copolymer und deren Mischungen.

4. Leuchtelement nach einem der vorhergehenden Ansprüche, **dadurch gekennzeichnet, dass** die Deckschichten, vorzugsweise das gesamte flächige Leuchtelement, in Form von Folien vorliegen.

5. Leuchtelement nach einem der vorhergehenden Ansprüche, **dadurch gekennzeichnet, dass** auf der Deckschicht mindestens eine Schicht zur Oberflächenvergütung aufgebracht ist.

6. Leuchtelement nach Anspruch 5, **dadurch gekennzeichnet, dass** die Schicht zur Oberflächenvergütung zumindest teilweise aus Polysilazan besteht.

7. Leuchtelement nach einem der vorhergehenden Ansprüche, **dadurch gekennzeichnet, dass** zumindest eine Deckschicht, insbesondere auf der dem Gewebe zugewandten Seite, mit einer reflektierenden Schicht versehen ist..

8. Leuchtelement nach einem der vorhergehenden Ansprüche, **dadurch gekennzeichnet, dass** die Deckschichten unter Vakuum aufgebracht sind.

9. Leuchtelement nach einem der vorhergehenden Ansprüche, **dadurch gekennzeichnet, dass** das Leuchtelement die Eigenschaften einer Folie aufweist.

10. Leuchtelement nach einem der vorhergehenden Ansprüche, **dadurch gekennzeichnet, dass** die erste Deckschicht Reflektoreigenschaften und die zweite Deckschicht Diffusoreigenschaften besitzt.

11. Leuchtelement nach einem der Ansprüche 1 bis 9, **dadurch gekennzeichnet, dass** die erste und die zweite Deckschicht Diffusoreigenschaften besitzen.

12. Leuchtelement nach einem der vorhergehenden Ansprüche, **dadurch gekennzeichnet, dass** die lichtleitenden Fasern mit Hilfe von Kettenfäden verwoben sind.

13. Leuchtelement nach Anspruch 12, **dadurch gekennzeichnet, dass** die Kettenfäden aus einem Polyester und/oder einer lichtleitenden Faser bestehen.

14. Leuchtelement nach einem der vorhergehenden Ansprüche, **dadurch gekennzeichnet, dass** zwischen dem Gewebe und den Deckschichten zumindest bereichsweise ein Adhäsionsmittel, insbesondere ein UV-gestartetes Adhäsionsmittel, aufgetragen ist.

15. Leuchtelement nach dem vorhergehenden Anspruch, **dadurch gekennzeichnet, dass** das Adhäsionsmittel ein Klebstoff auf Acrylbasis, ein Epoxid-Klebstoff oder ein ZweiKomponenten-Polyurethan-Klebstoff ist.

16. Leuchtelement nach einem der vorhergehenden Ansprüche, **dadurch gekennzeichnet, dass** die lichtleitenden Fasern an mindestens einem Ende in einem optischen Verbinder zusammengeführt sind, der an eine Lichtquelle ankoppelbar ist.

17. Leuchtelement nach dem vorhergehenden Anspruch, **dadurch gekennzeichnet, dass** die Ankopplung über eine optische Faser, z.B. LCPOF, einen Stab und/oder ein Faserbündel aus Polymethylmethacrylat erfolgt.

18. Leuchtelement nach einem der vorhergehenden Anspruch, **dadurch gekennzeichnet, dass** die lichtleitenden Fasern an dem nicht zur Lichteinkopplung verwendeten Ende so ausgebildet sind, dass eine Totalreflexion von Licht ermöglicht wird.

19. Leuchtelement nach dem vorhergehenden Anspruch, **dadurch gekennzeichnet, dass** die lichtleitenden Fasern an dem nicht zur Lichteinkopplung verwendeten Ende verspiegelt sind.

20. Leuchtelement nach einem der vorhergehenden Ansprüche, **dadurch gekennzeichnet, dass** das Leuchtelement eine Dicke von 15 µm bis 2 mm, insbesondere 25 bis 500 µm aufweist.

21. Leuchtelement nach einem der vorhergehenden Ansprüche, **dadurch gekennzeichnet, dass** das Leuchtelement eine Breite von 1 bis 300 cm, insbesondere von 50 bis 300 cm aufweist.

22. Leuchtelement nach einem der vorhergehenden Ansprüche, **dadurch gekennzeichnet, dass** das Leuchtelement eine Länge von 20 bis 400 m aufweist.

23. Leuchtelement nach einem der vorhergehenden Ansprüche, **dadurch gekennzeichnet, dass** das Leuchtelement als Endlosfolie erzeugt und ggf. anschliessend in Teilstücke zertrennt wird.

24. Leuchtelement nach einem der vorhergehenden Ansprüche, **dadurch gekennzeichnet, dass** die Deckschichten im Randbereich, ggf. ausschließlich, miteinander verklebt oder verschweißt sind und das Schichtgebilde über Vakuum zumindest in Teilflächenbereichen zusammengehalten ist.
